# EUROPEAN PATENT APPLICATION

(11) **EP 1 369 675 A2**
(43) Date of publication of application: **10.12.2003**
(21) Application number: 03010139.8
(22) Date of filing: 05.05.2003
(51) Int. Cl.: G01L 9/00

(54) **Pressure sensor assembly**

(30) Priority: 03.06.2002 JP 2002161847
(71) Applicant: Omron Corporation, Kyoto-shi, Kyoto 600-8530 (JP)
(72) Inventor: Yoshida, Shinsuke c/o Omron Corporation 801,, dori,Shimogyo-ku,Kyoto-shi Kyoto600-8530 (JP); Nozoe, Satoshi c/o Omron Corporation 801,, dori,Shimogyo-ku,Kyoto-shi Kyoto600-8530 (JP); Kuzuyama Daisuke c/o Omron Corporation 801,, dori,Shimogyo-ku,Kyoto-shi Kyoto600-8530 (JP); Toya, Takashi c /o Omron Corporation 801,, dori,Shimogyo-ku,Kyoto-shi Kyoto600-8530 (JP); Morishita, Sadaharu c /o Omron Corporation 801,, dori,Shimogyo-ku,Kyoto-shi Kyoto600-8530 (JP)
(74) Representative: Kilian, Helmut, Dr.

(57) **Abstract**

A pressure sensor assembling structure capable of keeping a homogeneous detection accuracy without any error that might otherwise be caused by a stress at an assembling time, and an assembling method for the assembling structure. This structure is constructed to comprise: a base having a fluid inlet port on one end side and an opening communicating with the fluid inlet port on the other end side; and a sensor element inserted from the opening of the base and fixed in the base such that a connecting face formed on its one side is exposed from the side of the opening.

## Description

### BACKGROUND OF THE INVENTION

### FIELD OF THE INVENTION

The present invention relates to a pressure sensor and, more particularly, to an assembly structure for an electrostatic capacity type pressure sensor and a assembling method of the pressure sensor.

### BACKGROUND ART

As the pressure sensor of the background art, electrostatic capacity type pressure sensors have been disclosed in JP-A-11-248579 and JP-A-2000-9572, for example. In the former pressure sensor, a sensor element 1 is temporarily fixed in a housing case 10. and an output adjustment is done in the state where a pressure occurring at a caulking time is loaded. Then, the sensor element 1 is caulked and fixed in the housing case 10.

In the latter pressure sensor, on the other hand, before a sensor element 1 is housed in a housing case 10, there is established a simulated assembly state, which falls under a proper compressibility range capable of keeping the sealing properties of a seal member 13, and the output of the pressure sensor element 1 is adjusted in the state where the atmospheric pressure is applied to a pressure sensing face 2a of the pressure sensor element 1. And, the pressure sensor element 1 is housed in the housing case 10 and is loaded with the atmospheric pressure. The pressure sensor element 1 is caulked and finally fixed when its output reaches that adjusted value.

In either of the methods, therefore, the output is adjusted by loading the pressure sensor element with a virtual pressure before the components are finally fixed.

### SUMMARY OF THE INVENTION

However, it is difficult to caulk the pressure sensor element under absolutely the same pressure after the output adjustment as that virtual one, and the caulking pressure easily disperses. Therefore, an assembly error easily occurs so that the detection accuracy seriously disperses among the pressure sensors. In case a trouble is found at the shipping test time after all the components were assembled, on the other hand, it is extremely difficult and troublesome to disassemble and adjust the pressure sensor. As a matter of fact, therefore, the troublesome pressure sensor has to be discarded in its entirety thereby to degrade the production yield. Thus, a problem is encountered by a rise in the production cost.

In view of the aforementioned problem, the invention has an object to provide a pressure sensor assembling structure capable of keeping a homogeneous detection accuracy without any error that might otherwise be caused by a stress at an assembling time, and an assembling method for the assembling structure.

In order to achieve the above-specified object, according to an aspect of the invention, there is provided a pressure sensor assembling structure, which is constructed to comprise: a base having a fluid inlet port on one end side and an opening communicating with the fluid inlet port on the other end side; and a sensor element inserted from the opening of the base and fixed in the base such that a connecting face formed on its one side is exposed from the side of the opening.

According to this aspect of the invention, the connecting face of the sensor element fixed in the base is exposed so that the output adjustment can be performed by connecting output adjusting means with the sensor element. Therefore, the sensor element need neither be fixed in the base after the output adjustment nor has its characteristics varied, so that an assembly structure for a pressure sensor having a homogeneous detection accuracy can be obtained without causing any error.

According to another aspect of the invention, there is provided a pressure sensor assembling structure, which is constructed to comprise: a base having a fluid inlet port on one end side and an opening communicating with the fluid inlet port on the other end side; a sensor element having a connecting face on one side and inserted from the opening of the base; and a cylindrical case forced to contact, when inserted from the opening of the base and fixed in the base, with the outer circumference edge portion of the connecting face of the sensor element and exposing the connecting face of the sensor element from an outside opening.

According to this aspect of the invention, the sensor element is fixed with the base and the cylindrical case before the output adjustment, and the connecting face of the sensor element is exposed. Therefore, the sensor element need neither be fixed in the base after the output adjustment nor has its characteristics varied, so that an assembly structure for a pressure sensor having a homogeneous detection accuracy can be obtained without causing any error.

According to still another aspect of the invention, there is provided a pressure sensor assembling structure, which is constructed to comprise: a base having a fluid inlet port on one end side and an opening communicating with the fluid inlet port on the other end side; a sensor element having a connecting face on one side and inserted from the opening of the base; an element holding ring inserted from the opening and abutting against the outer circumference edge portion of the connecting face of the sensor element; and a cylindrical case forced to contact, when inserted from the opening of the base and fixed in the base, at its inside opening edge portion with the element holding ring and exposing the connecting face of the sensor element from an outside opening.

According to this aspect of the invention, the sensor element is not only fixed-through the element holding ring fixed in the base and the cylindrical case but also has its connecting face exposed from the outside opening of the cylindrical case. Therefore, the sensor element need neither be fixed in the base after the output adjustment nor has its characteristics varied, so that an assembly structure for a pressure sensor having a homogeneous detection accuracy can be obtained without causing any error.

According to a further aspect of the invention, there is provided a pressure sensor assembling method, which comprise: inserting a sensor element from an opening formed in the other end side of a base and communicating with a fluid inlet port formed in the one end side of the base; fixing the sensor element in the base such that a connecting face formed on one side of the sensor element is exposed from the side of the opening; connecting output ad justingmeans mounted in a printed substrate, electrically with the connecting face of the sensor element thereby to adjust the output by activating the output adjusting means; and fixing the printed substrate with a case fixed in the base and a cover.

According to this aspect of the invention, after the sensor element was fixed in the base, the output adjustment is performed by connecting the output adjusting means with the exposed connecting face of the sensor element. Therefore, the sensor element does not have its characteristics varied, so that a pressure sensor having a homogeneous detection accuracy can be obtained.

According to a further aspect of the invention, there is provided a pressure sensor assembling method, which comprise: inserting a sensor element having a connecting face on one side, from an opening formed in the other end side of a base and communicating with a fluid inlet port formed in the one end side of the base; inserting a cylindrical case from the opening of the base and fixing the cylindrical case in the base thereby to force the inside opening edge portion of the cylindrical case to contact with the outer circumference edge portion of the connecting face of the sensor element thereby to expose the connecting face of the sensor element from the outside opening of the cylindrical case; connecting output adjusting means mounted in a printed substrate, electrically with the connecting face of the pressure sensor element thereby to adjust the output by activating the output adjusting means; and fixing the printed substrate with the cylindrical case and a cover.

According to this aspect of the invention, after the sensor element was fixed with the base and the cylindrical case, the output adjustment is performed by connecting the output adjusting means with the exposed connecting face of the sensor element. Therefore, the sensor element does not have its characteristics varied, so that a pressure sensor having a homogeneous detection accuracy can be obtained.

According to a further aspect of the invention, there is provided a pressure sensor assembling method, which comprise: inserting a sensor element having a connecting face on one side, from an opening formed in the other end side of a base and communicating with a fluid inlet port formed in the one end side of the base; inserting an element holding ring to abut against the outer circumference edge portion of the connecting face of the sensor element, from the opening of the base; inserting a cylindrical case from the opening of the base and further fixing the cylindrical case in the base thereby to force the inside opening edge portion of the cylindrical case to contact with the element holding ring thereby to expose the connecting face of the sensor element from the outside opening of the cylindrical case; connecting output adjusting means mounted in a printed substrate, electrically with the connecting face of the sensor element thereby to adjust the output by activating the output adjusting means; and fixing the printed substrate with the cylindrical case and a cover.

According to this aspect of the invention, after the sensor element was fixed with the base, the element holding ring and the cylindrical case, the output adjustment is performed by connecting the output adjusting means with the exposed connecting face of the sensor element. Therefore, the sensor element does not have its characteristics varied, so that a pressure sensor having a homogeneous detection accuracy can be obtained.

### BRIEF DESCRIPTION OF THE DRAWINGS

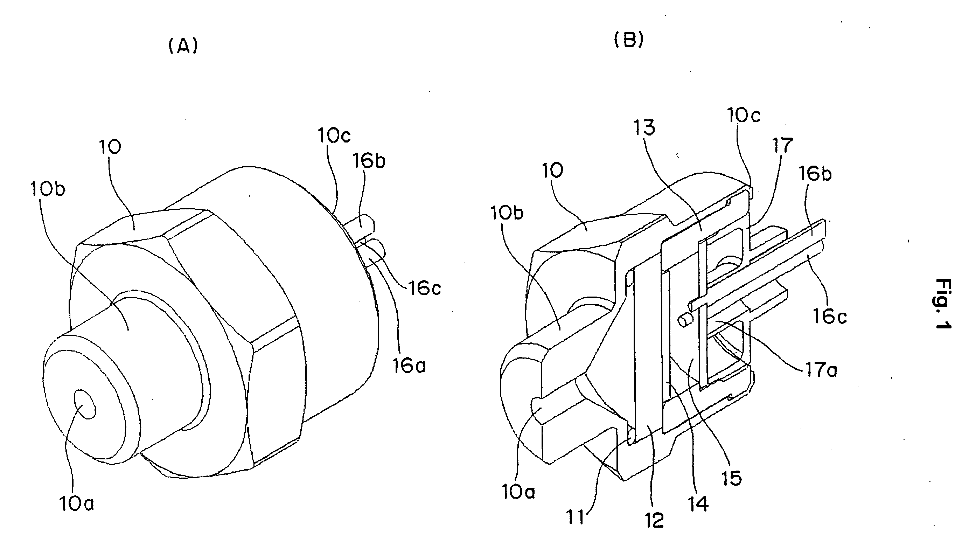

Of Figs . 1A and 1B showing a first embodiment of a pressure sensor assembly structure according to the present invention, Fig. 1A is a perspective view, and Fig. 1B is a sectional perspective view of Fig. 1A;
Fig. 2 is an exploded perspective view of the first embodiment shown in Figs. 1A and 1B;
Fig. 3 is a sectional front elevation of the first embodiment shown in Fig. 1B;
Of Figs. 4A and 4B showing a second embodiment of the pressure sensor assembly structure according to the invention, Fig. 4A is a perspective view, and Fig. 4B is a sectional perspective view of Fig. 4A;
Fig. 5 is an exploded perspective view of the second embodiment shown in Figs. 4A and 4B;
Fig. 6 is a sectional front elevation of the second embodiment shown in Fig. 4B;
Of Figs. 7A and 7B showing a third embodiment of the pressure sensor assembly structure according to the invention, Fig. 7A is a perspective view, and Fig. 7B is a sectional perspective view of Fig. 7A;
Fig. 8 is an exploded perspective view of the third embodiment shown in Figs. 7A and 7B;
Fig. 9 is a sectional front elevation of the third embodiment shown in Fig. 7B;
Fig. 10A is a sectional view showing a fourth embodiment of the pressure sensor assembly structure according to the invention;
Fig. 10B is a sectional view showing a fifth embodiment;
Fig. 11A is a sectional view showing a sixth embodiment of the pressure sensor assembly structure according to the invention;
Fig. 11B is a sectional view showing a seventh embodiment ;
Fig. 12A is a sectional view showing an eighth embodiment of the pressure sensor assembly structure according to the invention;
Fig. 12B is a sectional view showing a ninth embodiment; and
Fig. 13 is a sectional view showing a tenth embodiment of the pressure sensor assembly structure according to the invention.

### DESCRIPTION OF THE PREFERRED EMBODIMENTS

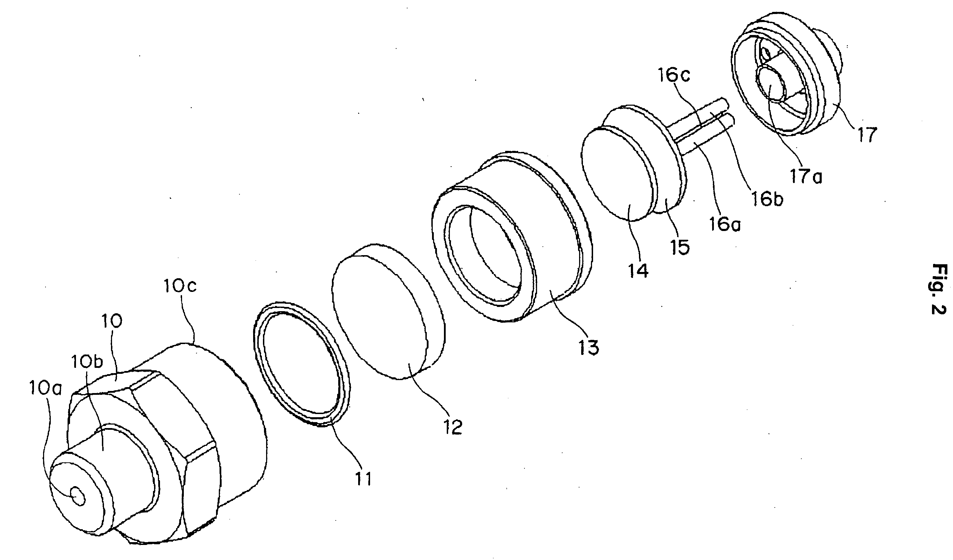

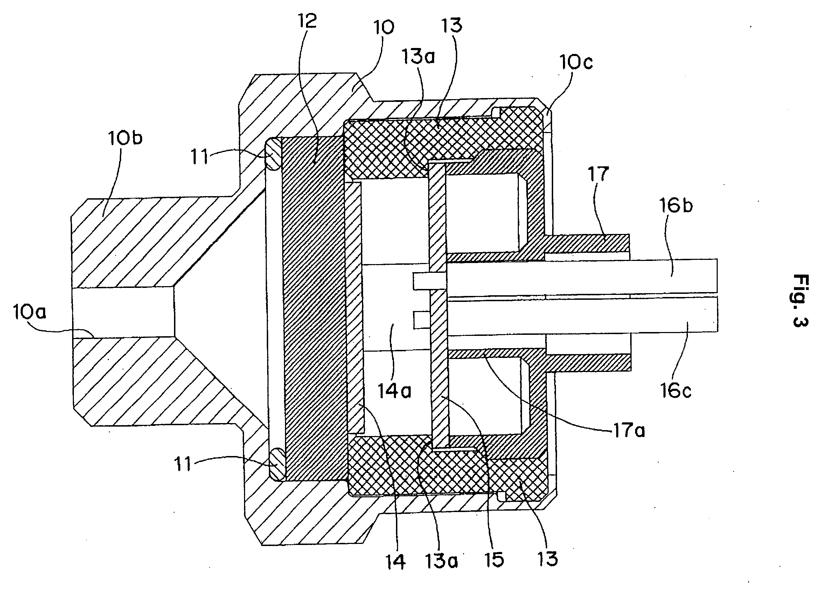

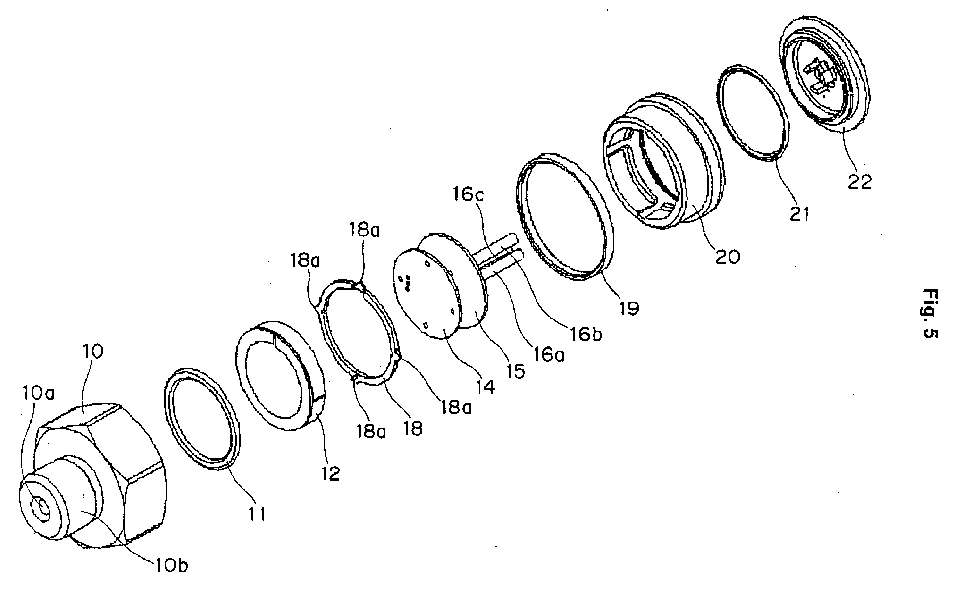

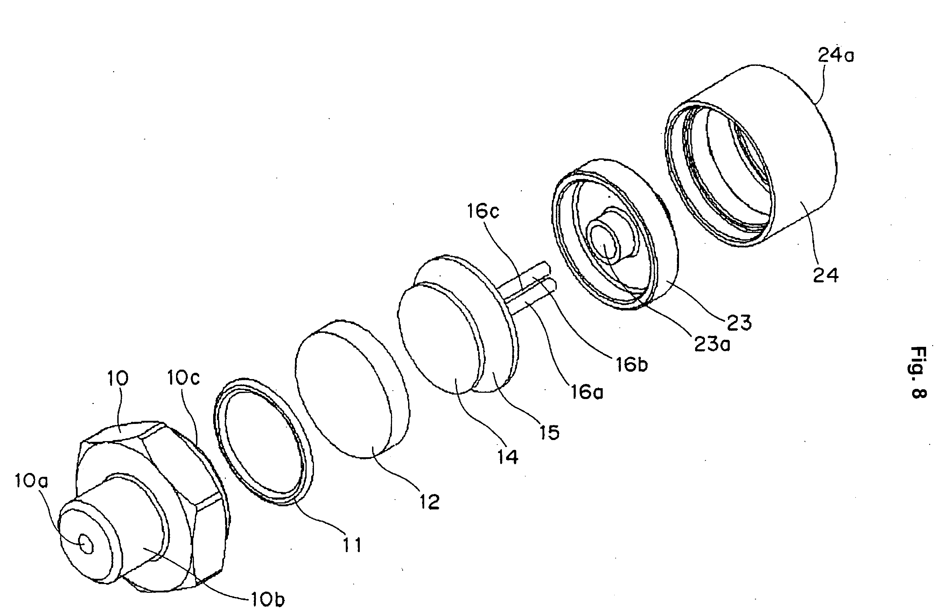

Embodiments according to the invention will be described with reference to Figs. 1A and 1B to Fig. 13.

A first embodiment of the invention is applied to an electrostatic capacity type pressure sensor, as shown in Figs. 1A and 1B to Fig. 3. This pressure sensor is constructed by assembling an O-ring 11, a sensor element 12, a case 13, first and second substrates 14 and 15 and a cover 17 sequentially with a base 10.

In order to facilitate the assembling works, the base 10 is formed in its outer circumference to have a hexagonal nut shape and is provided with a protrusion 10b having a fluid inlet port 10a at its one side end face and is largely opened on its remaining side.

The sensor element 12 is exemplified by the electrostatic capacity type pressure sensor, which is formed by joining two ceramic substrates integrally, and a (not-shown) connecting pin terminal is protruded from the side end face opposed to the first substrate 14.

This first substrate 14 is provided with such a (not-shown) through hole as can be connected with the pin terminal of the sensor element 12, and is connected to the second substrate 15 through a flexible filmed lead wire 14a. The second substrate 15 is clamped and fixed by a later-described stepped portion 13a of the case 13 and the leading end edge portion of the cover 17.

The case 13 has such an outer circumference shape as can be inserted from the opening edge portion 10c of the base 10, and is provided on its inner circumference with the stepped portion 13a for positioning the second substrate 15.

The cover 17 has such an outer circumference shape as can be inserted into the case 13, and is provided therein with such a cylindrical portion 17a as is protruded to abut against the surface of the second substrate 15.

Here will be described how to assemble the pressure sensor which is composed of the aforementioned parts.

At first, the O-ring 11, the sensor element 12 and the case 13 are introduced from the opening edge portion 10c of the base 10, and the opening edge portion 10c is caulked to fix the sensor element 12 in the base 10. Next, the first substrate 14 is assembled with the base 10 and is electrically connected with the pin terminal of the sensor element 12. At this stage, the output is adjusted to store the pressure characteristics and the temperature characteristics.

Then, the second substrate 15 connected with the first substrate 14 through the flexible filmed lead wire 14a is positioned on the stepped portion 13a of the case 13. Lead wires 16a, 16b and 16c are electrically connected with the second substrate 15, and the cover 17 having the lead wires 16a, 16b and 16c is assembled and positioned with the case 13, and the cover 17 sealed and fixed in the case 13 by a not-shown sealing member.

In this embodiment, the sensor element 12 is properly fixed in the base 10, and the remaining components parts including the first and second substrates 14 and 15, the lead wires 16a, 16b and 16c and the cover 17 are assembled in the base 10. When the first and second substrates 14 and 15 and so on are assembled, however, it is not feared in the least that a high pressure is applied to the sensor element 12. Therefore, it is advantageous that the action characteristics of the pressure sensor element 12 do not change even after completion of the assembly thereby to provide a pressure sensor having a homogeneous detection accuracy.

Here, the first substrate 14 may be electrically connected in advance with the sensor element 12, or the lead wires 16a, 16b and 16c may be electrically connected in advance with the second substrate 15. Moreover, the case 13 may be fastened integrally with the base 12, or the cover 17 may be fastened or caulked integrally with the cover 13.

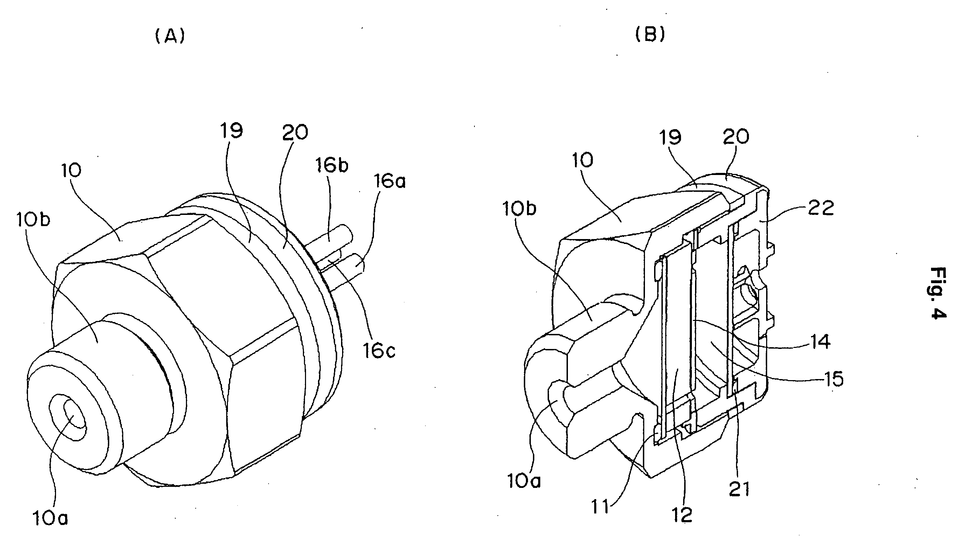

As shown in Figs. 4A and 4B to Fig. 6, a pressure sensor according to a second embodiment is constructed by assembling an O-ring 11, a sensor element 12, an element holding ring 18, first and second substrates 14 and 15, a spacer 19, a case 20, an O-ring 21 and a cover 22 with a base 10.

In order to facilitate the assembling works, the base 10 is formed in its outer circumference to have a hexagonal nut shape and is provided with a protrusion 10b having a fluid inlet port 10a at its one side end face and is largely opened on its remaining side to form a female screw portion (not-shown) to the inner circumstance.

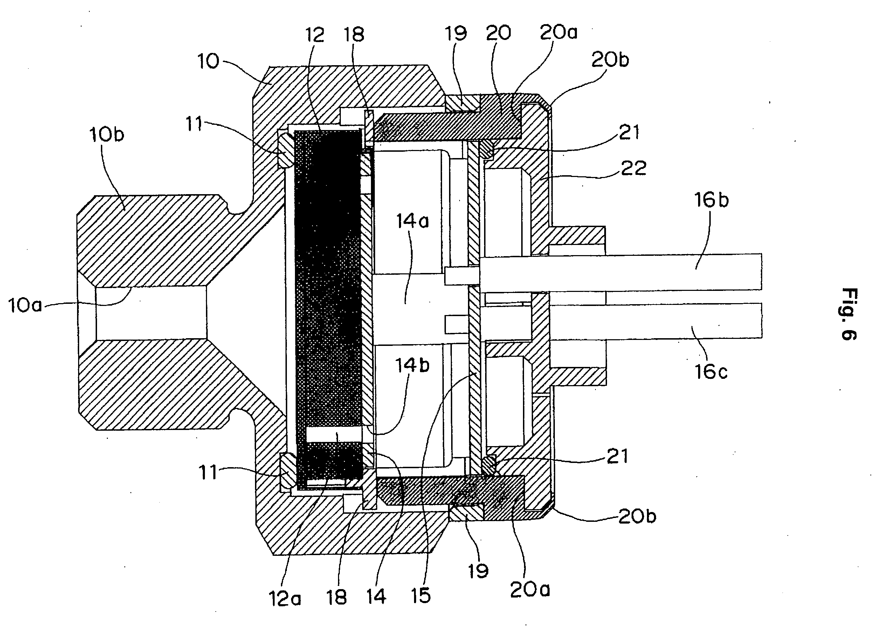

The sensor element 12 is exemplified by the electrostatic capacity type pressure sensor which is formed by joining two ceramic substrates integrally, and a connecting pin terminal 12a (Fig. 6) is protruded from the side end face opposed to the first substrate 14.

The element holding ring 18 has such an internal diameter as can abut against the outer circumference edge or one side end face of the sensor element 12 and is provided at an equal pitch with four lugs capable of abutting against the inner circumference of the base 10.

The first substrate 14 is provided with such a through hole 14b (Fig. 6) as can be connected with the pin terminal 12a of the sensor element 12, and is connected to the second substrate 15 through a flexible filmed lead wire 14a. Moreover, lead wires 16a, 16b and 16c are electrically connected with the second substrate 15.

The spacer 19 is a ring having such an internal diameter as can fit the outer circumference of the case 20 , and is clamped by the base 10 and the case 20.

The case 20 has such an outer circumference shape at its one side portion as can be inserted from the opening of the base 10, and is provided on the inner circumference of its remaining side portion with such a stepped portion 20a for positioning the cover 22 as can be caulked at its opening edge portion 20b.

The cover 22 has such an outer circumference shape as can be inserted from the opening of the case 20 and can be fitted on the stepped portion 20a.

Here will be described how to assemble the pressure sensor which is composed of the aforementioned parts.

At first, the O-ring 11, the sensor element 12 and the element holding ring 18 are introduced from the opening of the base 10. Next, the case 20 having the spacer 19 fitted therein is inserted into the base 10 and is fastened integrally to fix the sensor element 12 in the base 10. For convenience of description, here is not shown the portion illustrating the state in which the base 10 and the case 20 are fastened.

Moreover, the first substrate 14 is assembled in the base 10 , and the pin terminal 12a of the sensor element 12 is inserted into and electrically connected with a through hole 14b of the first substrate 14. At this stage, the output is adjusted to store the pressure characteristics and the temperature characteristics.

Here in this embodiment, the spacer 19 functions as a thickness gauge at the time when the case 20 is fixed in the base 10. It is, therefore, unnecessary to meter the caulking force or torque.

And, the second substrate 15 connected with the first substrate 14 through the flexible filmed lead wire 14a is positioned in the case 20. Next, the O-ring 21 and the cover 22 are sequentially introduced and positioned in the case 20, and the opening edge portion 20b of the case 20 is caulked.

In this embodiment, the sensor element 12 is fixed in the base 10 and is connected with the first substrate 14 . After adjustment of the output, another component or the second substrate 15 is assembled with the first substrate 14. Especially when the cover 22 is caulked in the case 20, the caulking force is applied to the outer circumference edge portion of the sensor element 12. Therefore, it is advantageous that the action characteristics of the pressure sensor element 12 do not change even after completion of the assembly thereby to provide a pressure sensor having a homogeneous detection accuracy.

Here , the first substrate 14 may be electrically connected in advance with the sensor element 12. Moreover, the case 20 may be caulked in the base 10, or the cover 22 may be fastened integrally with the case 20.

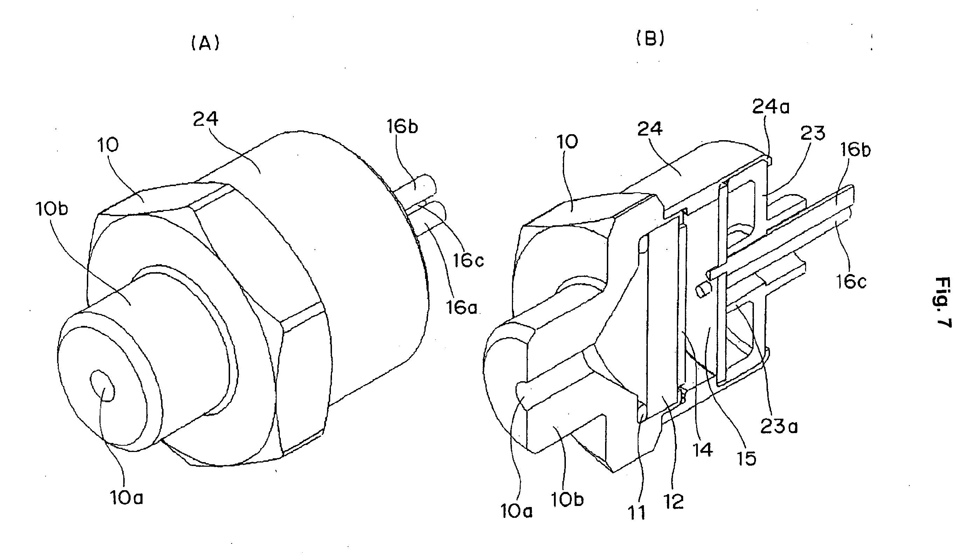

As shown in Figs. 7A and 7B to Fig. 9, a pressure sensor according to a third embodiment is constructed by assembling an O-ring 11, a sensor element 12, first and second substrates 14 and 15, a cover 23 and a case 24 with a base 10.

In order to facilitate the assembling works, the base 10 is formed in its outer circumference to have a hexagonal nut shape and is provided with a protrusion 10b having a fluid inlet port 10a at its one side end face and is so largely opened on its remaining side that its opening edge portion 10c can be caulked.

The sensor element 12 is exemplified by the electrostatic capacity type pressure sensor which is formed by joining two ceramic substrates integrally, and a (not-shown) connecting pin terminal is protruded from the side end face confronted with the first substrate 14.

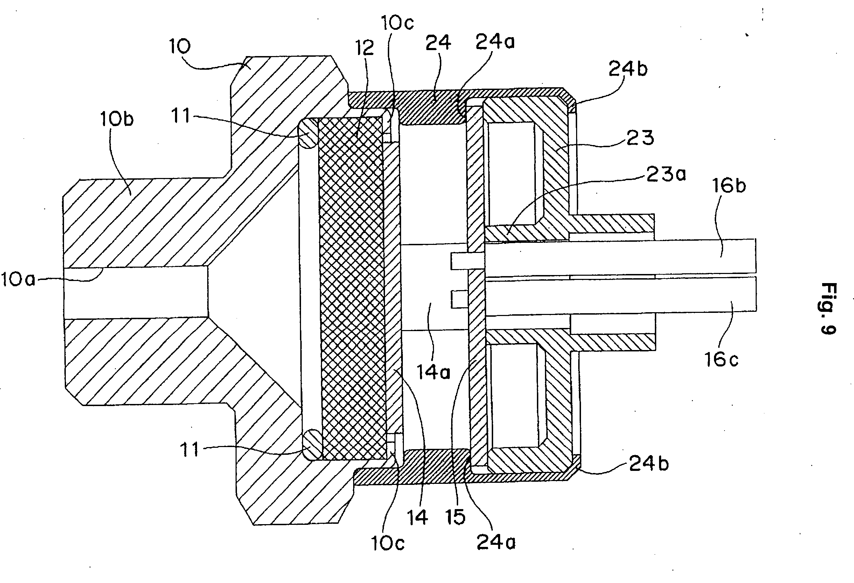

The first substrate 14 is provided with such a (not-shown) through hole as can be connected with the pin terminal of the sensor element 12, and is connected to the second substrate 15 through a flexible filmed lead wire 14a, as shown in Fig. 9. The second substrate 15 is clamped and fixed by a stepped portion 24a of the case 24 and the leading end edge portion of the cover 23.

This cover 23 has such an outer circumference shape as can be inserted into the case 24, and is provided therein with a cylindrical portion 23a to abut against the central portion of the surface of the second substrate 15.

The case 24 is formed into such a cylindrical shape as can be fitted on the outer circumference of one side end portion of the base 10, and is provided with the stepped portion 24a for positioning the second substrate 15 on its inner circumference and such an opening edge portion 24b as can be caulked.

Here will be described how to assemble the pressure sensor which is composed of the aforementioned parts.

At first, the O-ring 11 and the sensor element 12 are introduced from the opening edge portion 10c of the base 10. After this , the opening edge portion 10c of the base 10 is caulked to fix the sensor element 12 in the base 10. Next, the case 24 is fitted and fixed on the outer circumference of the caulked side end portion of the base 10. Moreover, the pin terminal of the sensor element 12 is electrically connected with the first substrate 14. At this stage, the output is adjusted to store the pressure characteristics and the temperature characteristics.

And, the second substrate 15 connected with the first substrate 14 through the flexible filmed lead wire 14a is positioned on the stepped portion 24a of the case 24. Then, the cover 23 is assembled and positioned with the case 24 by inserting the lead wires 16a, 16b and 16c connected with the second substrate 15, and is fixed by caulking the opening edge portion 24b of the case 24.

In this embodiment, the sensor element 12 is fixed in the base 10, and the first substrate 14 is electrically connected to adjust the output. After this, the remaining components including the second substrate 15 are assembled. Even in case the cover 23 is caulked in the case 24, however, no high pressure is applied to the sensor element 12. Therefore, it is advantageous that the action characteristics of the pressure sensor element 12 do not change even after completion of the assembly thereby to provide a pressure sensor having a homogeneous detection accuracy.

Here, the first substrate 14 may be electrically connected in advance with the sensor element 12. Alternatively, the case 24 may be fastened integrally with the base 12 , or may be adhered integrally through a sealing member. Moreover, the cover 23 may be fastened or adhered integrally with the case 24.

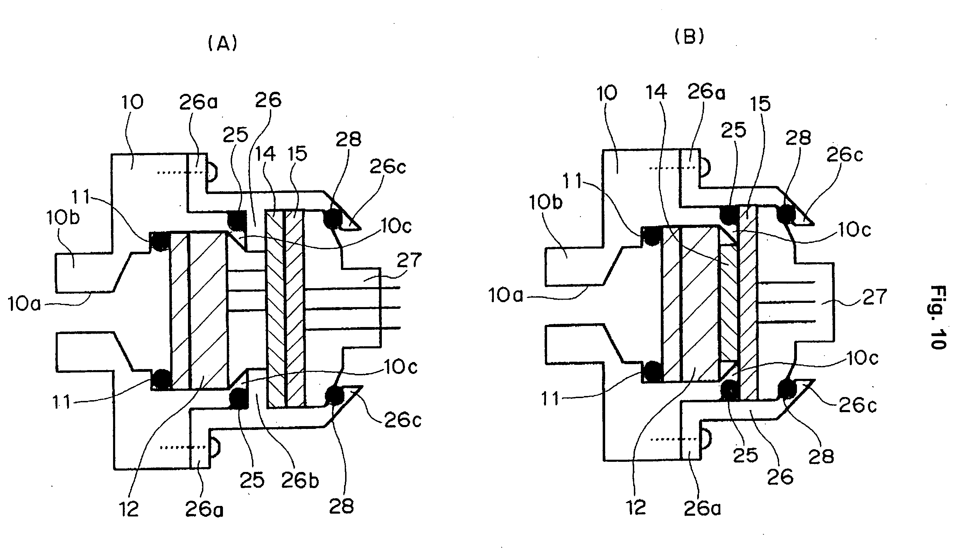

In a fourth embodiment according to the invention, as shown in Fig. 10A, the O-ring 11 and the sensor element 12 are housed and positioned in the base 10, and the opening edge portion 10c of the base 10 is then caulked. And, an O-ring 25 is arranged on the outer circumference of the opening edge portion 10c caulked, and a flanged portion 26a of a case 26 is fitted on one side end portion of the base 10 and is fastened on the same by means of screws. Next, the first substrate 14 housed in the case 26 is electrically connected with the sensor element 12 through a lead wire. In this state, the output is adjusted for the pressure characteristics or the like. Moreover, the first substrate 14 is positioned on ribs 26b of the case 26, and the second substrate 15 electrically connected is put on the first substrate 14. And, a cover 27 is inserted into the case 26 , and an opening edge portion 26c of the case 26 is caulked and fixed through an O-ring 28.

According to the fourth embodiment, the ribs 26b of the case 26 receive the caulking pressure. Therefore, no pressure is applied to the sensor element 12 so that the output-adjusted action characteristics do not change.

In a fifth embodiment according to the invention, as shown in Fig. 10B, the O-ring 11 and the sensor element 12 are housed and positioned in the base 10, and the opening edge portion 10c of the base 10 is then caulked. And, an O-ring 25 is arranged on the outer circumference of the opening edge portion 10c caulked, and a flanged portion 26a of a case 26 is fitted on one side end portion of the base 10 and is fastened on the same by means of screws. Next, the first substrate 14 housed in the case 26 is electrically connected with the sensor element 12 through a lead wire. In this state, the output is adjusted for the pressure characteristics or the like. Moreover, the second substrate 15 electrically connected is put on the first substrate 14. And, a cover 27 is inserted into the case 26, and an opening edge portion 26c of the case 26 is caulked and fixed through an O-ring 28.

According to the fifth embodiment, the first substrate 14 is held in direct abutment against the sensor element 12. It is, therefore, advantageous that the outside dimension can be reduced.

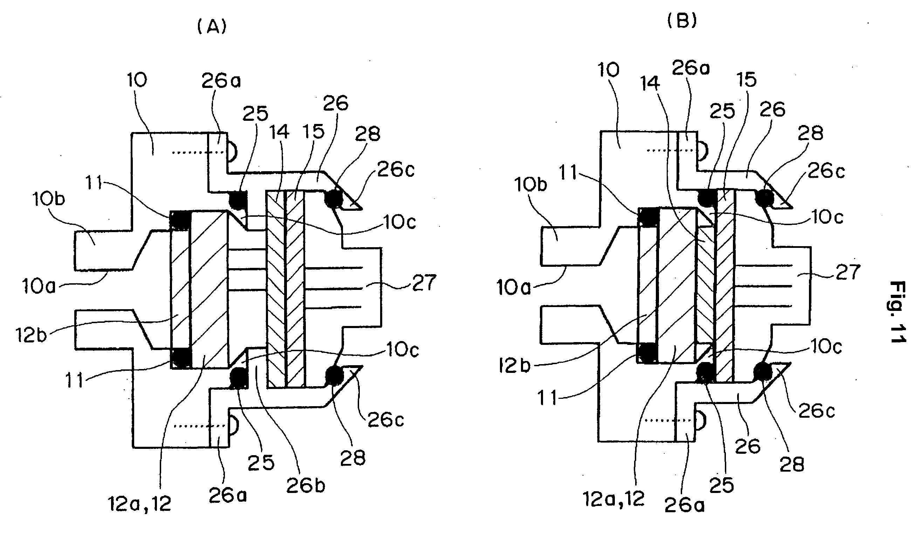

As shown in Fig. 11A, a sixth embodiment according to the invention is similar to the foregoing fourth embodiment but is different in the shape of the sensor element 12.

Specifically, the sensor element 12 is formed by joining a thick, diametrically larger base 12a and a diaphragm or a diametrically smaller substrate 12b integrally. The O-ring 11 is pressure-welded on the outer circumference edge portion of the base 12a. Therefore, the stress to be generated when the base 10 is caulked is wholly loaded on the base 12a. It is advantageous that the stress will hardly affect the action characteristics of the sensor element 12.

As shown in Fig. 11B, a seventh embodiment according to the invention is similar to the foregoing fifth embodiment but is different in that the sensor element 12 is formed by joining a thick, diametrically larger base 12a and a diaphragm or a diametrically smaller substrate 12b integrally. Like the foregoing fifth embodiment, therefore, it is advantageous to provide a pressure sensor having action characteristics hardly varied by the caulking force of the base 10.

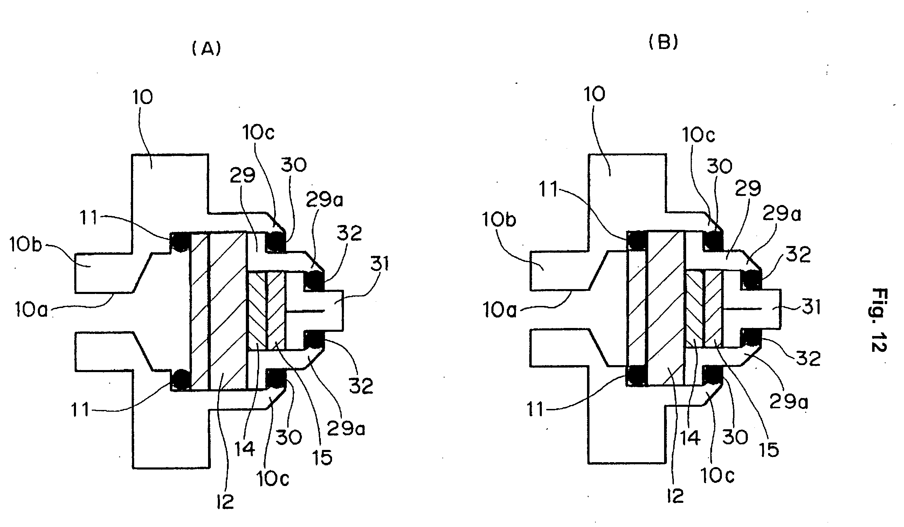

In an eighth embodiment according to the invention, as shown in Fig. 12A, not only the O-ring 11 and the sensor element 12 but also a case 29 is housed in the base 10. Next, an O-ring 30 is inserted into and positioned in the case 29, and this case 29 is then fixed by caulking the opening edge portion 10c of the base 10. And, the first substrate 14 is inserted from the opening edge portion 29a of the case 29 and is electrically connected with the sensor element 12 . In this state, the output is adjusted for the pressure characteristics or the like. Moreover, the second substrate 15 electrically connected with the first substrate 14 is inserted into the case 29, and A cover 31 having a generally T-shaped section is housed. Moreover, an O-ring 32 is fitted and positioned on the cover 31, and the cover 31 is then fixed through the O-ring 32 by caulking the opening edge portion 29a of the case 29.

As shown in Fig. 12B, a ninth embodiment according to the invention is substantially similar to the foregoing eighth embodiment and is constructed such that the sensor element 12 is formed by joining a thick, diametrically larger base 12a and a diaphragm or a diametrically smaller substrate 12b integrally. Therefore, it is advantageous to provide a pressure sensor having action characteristics hardly varied by the caulking force.

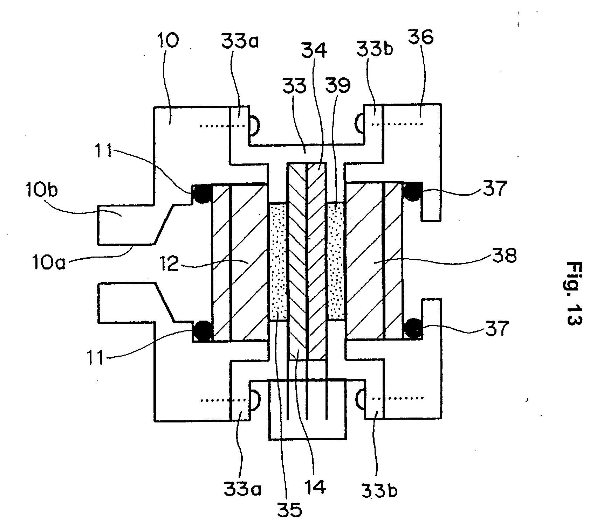

In a tenth embodiment according to the invention, as shown in Fig. 13, the O-ring 11 and the sensor element 12 are housed and positioned at first in the base 10. And, the sensor element 12 is fixed by positioning and fastening a flanged portion 33a of a case 33 on the base 10 by means of screws. At this time, the pin terminal (not-shown) of the sensor element 12 is inserted into and electrically connected with the through hole of the first substrate 14. The two substrates 14 and 34 housed in the case 33 are inserted and positioned from the insertion hole (not-shown) so that they are completely electrically insulated from each other. Moreover, the substrate 14 is held in abutment against the sensor element 12 through a cushioning member 35.

Next, an O-ring 37 and a sensor element 39 are inserted into and positioned in another base 36, and a flanged portion 33b of the case 33 is assembled and fastened by means of screws. At this time, the pin terminal of the sensor element 38 is inserted into and electrically connected with the through hole of the substrate 34 through a cushioning member 39.

According to this embodiment, it is advantageous that two kinds of measurements can be done with the single pressure sensor by arranging the two sensor elements 12 and 38.

In all the foregoing embodiments, the sensor element 12 is not integrally adhered to the component parts such as the first substrate 14. Therefore, it is advantageous that the pressure sensor can be easily disassembled, repaired and replaced.

According to the invention, the sensor element fixed in the base has its connected face exposed so that the output can be adjusted by connecting the output adjusting means with the sensor element. Therefore, the sensor element need neither be fixed in the base after the output was adjusted nor has its characteristics varied. Therefore, the invention has an effect that it can provide an assembly structure for a pressure sensor having a homogeneous detection accuracy without causing any error.

## Claims

1. A pressure sensor assembling structure, comprising: a base having a fluid inlet port on one end side and an opening communicating with said fluid inlet port on the other end side; and a sensor element inserted from the opening of said base and fixed in said base such that a connecting face formed on its one side is exposed from the side of said opening.

2. A pressure sensor assembling structure, comprising: a base having a fluid inlet port on one end side and an opening communicating with said fluid inlet port on the other end side; a sensor element having a connecting face on one side and inserted from the opening of said base; and a cylindrical case forced to contact, when inserted from the opening of said base and fixed in said base, with the outer circumference edge portion of the connecting face of said sensor element and exposing the connecting face of said sensor element from an outside opening.

3. A pressure sensor assembling structure, comprising: a base having a fluid inlet port on one end side and an opening communicating with said fluid inlet port on the other end side; a sensor element having a connecting face on one side and inserted from the opening of said base; an element holding ring inserted from said opening and abutting against the outer circumference edge portion of the connecting face of said sensor element; and a cylindrical case forced to contact, when inserted from the opening of said base and fixed in said base, at its inside opening edge portion with the element holding ring and exposing the connecting face of said sensor element from an outside opening.

4. A pressure sensor assembling method, comprising: inserting a sensor element from an opening formed in the other end side of a base and communicating with a fluid inlet port formed in the one end side of said base; fixing said sensor element in said base such that a connecting face formed on one side of said sensor element is exposed from the side of said opening; connecting output adjusting means mounted in a printed substrate, electrically with the connecting face of said sensor element thereby to adjust the output by activating said output adjusting means; and fixing said printed substrate with a case fixed in said base and a cover.

5. A pressure sensor assembling method, comprising: inserting a sensor element having a connecting face on one side, from an opening formed in the other end side of a base and communicating with a fluid inlet port formed in the one end side of said base; inserting a cylindrical case from the opening of said base and fixing said cylindrical case in said base thereby to force the inside opening edge portion of said cylindrical case to contact with the outer circumference edge portion of the connecting face of said sensor element thereby to expose the connecting face of said sensor element from the outside opening of said cylindrical case; connecting output adjusting means mounted in a printed substrate, electrically with the connecting face of saidpressure sensor element thereby to adjust the output by activating said output adjusting means; and fixing said printed substrate with said cylindrical case and a cover.

6. A pressure sensor assembling method, comprising: inserting a sensor element having a connecting face on one side, from an opening formed in the other end side of a base and communicating with a fluid inlet port formed in the one end side of said base; inserting an element holding ring to abut against the outer circumference edge portion of the connecting face of said sensor element, from the opening of said base; inserting a cylindrical case from the opening of said base and further fixing said cylindrical case in said base thereby to force the inside opening edge portion of said cylindrical case to contact with said element holding ring thereby to expose the connecting face of said sensor element from the outside opening of said cylindrical case; connecting output adjusting means mounted in a printed substrate, electrically with the connecting face of said sensor element thereby to adjust the output by activating said output adjusting means; and fixing said printed substrate with said cylindrical case and a cover.
